Europäisches Patentamt

European Patent Office

Office européen des brevets

(11) Publication number: **0 105 750**
**B1**

(12) # EUROPEAN PATENT SPECIFICATION

(45) Date of publication of patent specification: **22.04.87**

(21) Application number: **83305952.0**

(22) Date of filing: **30.09.83**

(51) Int. Cl.⁴: **H 01 B 3/44,** H 01 G 4/18, B 29 D 7/00, C 08 F 14/22

(54) **Dielectric film and process for producing same.**

(30) Priority: **01.10.82 JP 173634/82**

(43) Date of publication of application: **18.04.84 Bulletin 84/16**

(45) Publication of the grant of the patent: **22.04.87 Bulletin 87/17**

(84) Designated Contracting States: **DE FR GB IT NL**

(56) References cited:
EP-A-0 036 757
DE-B-1 504 721
DE-B-1 704 762
DE-B-1 949 855

The file contains technical information submitted after the application was filed and not included in this specification

(73) Proprietor: **KUREHA KAGAKU KOGYO KABUSHIKI KAISHA**
9-11 Horidome-cho 1-chome Nihonbashi Chuo-ku
Tokyo (JP)

(72) Inventor: **Murayama, Naohiro**
79-16 Aza-Suganezawa Tairakamata
Iwaki-shi Fukushima-ken (JP)
Inventor: **Kakutani, Haruko**
1006, 4-4-17, Ichikawa
Ichikawa-shi Chiba-ken (JP)
Inventor: **Mizuno, Toshiya**
160-1, Harada Hishiki-machi
Iwaki-shi Fukushima-ken (JP)
Inventor: **Nakamura, Kenichi**
4-32, Shisawasakuta Nakoso-machi
Iwaki-shi Fukushima-ken (JP)
Inventor: **Terasaki, Syuji**
1-9 Kanekodaira Azumada-machi
Iwaki-shi Fukushima-ken (JP)

(74) Representative: **Bass, John Henton et al**
REDDIE & GROSE 16 Theobalds Road
London WC1X 8PL (GB)

Courier Press, Leamington Spa, England.

## Description

This invention relates to a dielectric film comprising a vinylidene fluoride polymer and having improved electrical and optical properties, and to a process for producing the same.

Films comprising a vinylidene fluoride polymer, that is, polyvinylidene fluoride films, have a high dielectric constant and make possible a small-sized capacitor using the film as its dielectric material. Furthermore, a vinylidene fluoride film that contains ionic substances allows the ionic substances to move under a low external electric field owing to the high dielectric effect of the film. However, ordinary melt-extruded films, cast films prepared by solvent evaporation or pressed films have a dielectric constant (or relative permittivity) of about 9—10 at the most at room temperature and at a frequency of about 1 KHz, while the dielectric loss tan δ at room temperature and in a low frequency region below the commercial frequency may well exceed 3—5%.

To increase the dielectric constant and reduce the tan δ of polyvinylidene fluoride films, an improved process of stretching once-formed unoriented or unstretched films at least in one direction, and of fixing them has been developed (see Japanese Patent Publication No. 17680/1975). The film prepared by this method has an improved tan δ of less than 3% in the low frequency region and a greater dielectric constant of more than 10—11 at room temperature and at about 1 KHz as compared with that of the unstretched film. However, the stretched and oriented film has a tendency to shrink on heating. Even though, by heat-treatment of the films, such heat shrinkage can be prevented at a temperature lower than that of the heat-treatment, if the temperature of the heat-treatment is increased to near the melting point of the film, the molecular orientation of the resin in the film is altered and may possibly change the physical properties of the film. Accordingly, it has been impossible to obtain any stretch films free from heat shrinkage at a temperature near the melting point. Thus, polyvinylidene fluoride films, having dielectric properties such as dielectric constant and tan δ improved by a stretching operation, were liable to suffer a significant and irreversible change in dielectric properties owing to heat shrinkage.

Further, in some cases the dielectric constant of the stretched and oriented polyvinylidene fluoride film, as measured between the commercial frequency and 1 KHz, increases remarkably as the temperature rises from about 0°C to about 80°C and, for instance, shows an increase of more than 10% between 20°C and 80°C and even more than 30% between 0°C and 80°C. If the dielectric constant of the dielectric material in a capacitor changes, this causes a change in electrostatic capacitance and, moreover, various properties of a circuit using such a capacitor will vary. Furthermore, if an irreversible change due to heat shrinkage or the like occurs, it becomes impossible to forecast the temperature-dependent change in the electrical constants of the circuit.

It is also known that the stretching operation for improving the dielectric property of polyvinylidene fluoride film causes conversion of the crystal form between the two main crystal structures of polyvinylidene fluoride, that is, from α-structure to highly polar β-structure, and that, when exposed to a high electric field, polyvinylidene fluoride of the β-structure is provided with high piezoelectric and pyroelectric properties. For example, when a polyvinylidene fluoride film of the β-structure is used for a surge absorber in an electronic circuit, if it is subjected to a dielectric strength test under the application of a high voltage before mounting, or exposed to a fairly high voltage which is even lower than the dielectric strength after mounting, piezoelectric and pyroelectric properties are conferred on the film. Since undesirable phenomena, such as generation of noise signals, may be caused by changes in the ambient temperature, the provision of such piezoelectric and pyroelectric properties is usually not preferred in applications of films for a capacitor.

In addition, most unstretched or unoriented polyvinylidene fluoride films contain spherulites, and the oriented film prepared by stretching these spherulites often has an uneven surface and poor optical transparency. It is thus desirable to eliminate such unevenness while improving the characteristic properties such as dielectric strength required for electrical materials.

The present inventors have made various studies in order to obtain a dielectric film which does not suffer from the foregoing defects in polyvinylidene fluoride dielectric films caused by the stretching operation and, in the course of these studies have made the present invention.

The present invention now provides a dielectric film comprising a vinylidene fluoride polymer or copolymer wherein the said film has a predominantly α-crystal structure, the molecular axes in the crystalline region of the film are oriented mainly parallel to the plane of the film, the degree of orientation π being from 0.8 to 1.0, and the film manifests no heat shrinkage when heated from room temperature to near the melting point.

The present invention also provides a process for producing a dielectric film as defined above by an inflation method, wherein a vinylidene fluoride polymer is extruded from a die into a tubular form, the tube is inflated by introduction of a fluid, and the tubular molten polymer is kept inflated until it is cooled to solidification.

In the drawings:

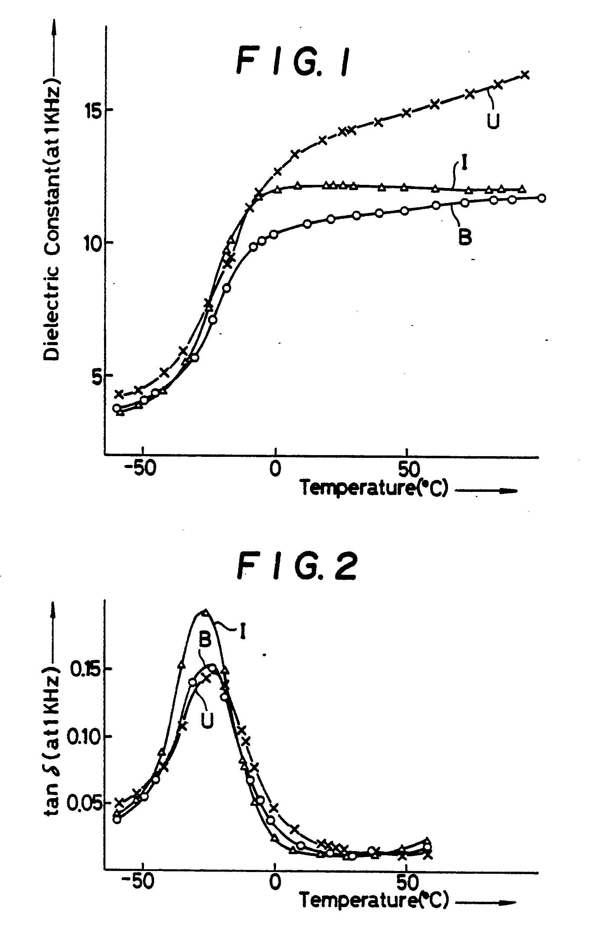

Figs. 1 and 2 are graphs illustrating the effects achieved by this invention and showing the temperature-dependent change in dielectric constant and tan δ, both measured at 1 KHz, respectively.

Vinylidene fluoride polymers to be used in this invention include not only polyvinylidene fluoride (itself but also those copolymers which further comprise olefinic monomers, such as halogenated ethylene, which are copolymerizable with vinylidene fluoride monomer. It further includes those polymers which are incorporated with other polymeric materials when mixed to such an extent that they do not impair the performance of the polyvinylidene fluoride, for example, polymethyl-methacrylate, polyethylene halides or processing aids.

Although the film according to this invention can optionally be treated, for example, by heat-treatment to such an extent as does not impair the high dielectric constant of the film, a cross-linking treatment is usually undesirable for attaining a high dielectric constant.

The dielectric film according to the present invention is prepared by a method in which a polyvinylidene fluoride polymer which has been highly flow-oriented in a molten state is solidified. Since the film is solidified from the molten state, its crystal structure is composed mainly of the $\alpha$-crystal structure. Further, since the film is solidified from a highly flow-oriented molten resin, most of the molecular axes in the crystal region are oriented parallel to the plane of the film. Moreover, since the orientation of the crystal has not resulted from a stretching operation, the film manifests no heat shrinkage in any temperature region in the course of a rise in temperature from ambient temperature up to the melting point of the crystal.

Accordingly, the dielectric film of this invention has the foregoing constitution, that is, it comprises a vinylidene fluoride polymer and has the $\alpha$-crystal structure which may possibly contain a minor amount of the $\beta$-structure or other crystal forms, but it is preferred that the composition of the crystal structure has an absorption ratio D530/D510 greater than 3, wherein D530 represents the characteristic absorption at 530 $cm^{-1}$ for the $\alpha$-crystal structure and D510 the characteristics absorption at 510 $cm^{-1}$ for the $\beta$-crystal structure in the infrared absorption spectrum.

The orientation of the molecular axis in the crystal line region can be determined from the film edge by means of x-ray diffractometry. Then the degree of orientation of the molecular axis parallel to the film surface is determined as:

$$\pi = \frac{180 - \Delta 2\theta}{180}$$

It is required that the dielectric film of this invention has a degree of orientation $\pi$ ranging from 0.8 to 1.0.

Further, it is desired that the dielectric film according to this invention has its molecular axes anisotropically oriented also in the plane of the film, and the anisotropy can be detected by the x-ray diffraction chart, the birefringence index or the dichroic ratio in the infrared absorption spectrum. When x-ray diffractometry is used, the anisotropy can be determined from the diffraction pattern obtained by irradiating with x-rays perpendicular to the plane of the film. It is usually convenient, however, to detect the anisotropy from the dichroic ratio in the characteristic infrared absorption band. At 530 $cm^{-1}$, which is one of the characteristic absorption bands for the $\alpha$-crystal structure, when the incident infrared rays are perpendicular to the plane of the film, the absorption intensity of the infrared rays polarized in the direction perpendicular to the orientation direction of the molecular axes is greater than that of the infrared rays polarized in the direction parallel to the molecular axes. Where $D_{\parallel}$ represents the absorbence of the infrared rays perpendicular to the plane of the film and polarized in the direction parallel to the film winding direction and $D\perp$ the absorbance of the infrared rays perpendicular to the plane of the film and polarized in the direction perpendicular to the film winding direction; if the dichroic ratio $D\perp/D_{\parallel}$ is greater than 1, the molecular axis is oriented in the direction parallel to the film winding direction; if the ratio $D\perp/D_{\parallel}=1$, there is no anisotropy in the directions perpendicular to and parallel to the winding direction; and if the ratio is less than 1, the axis is oriented in the direction perpendicular to the winding direction. The film according to this invention has a dichroic ratio $(D\perp/D_{\parallel})$ greater than 1.3.

A further advantageous feature of the film according to this invention is that the film exhibits no heat shrinkage at temperatures below the melting point of the films. Ordinary stretched and oriented polymeric films often shrink when they are re-heated to the stretching temperature or up to about the heat-treatment temperature, whereas the films according to this invention exhibit no heat shrinkage even when they are heated up to the melting point of the crystal, in spite of the fact that the molecules are oriented, because the film according to this invention is not one which has been oriented by post-stretching. With the film according to this invention having improved electrical properties, it is important that no heat shrinkage is caused by heating to near the melting point, that is, the heat expansion coefficient of the film in the course of a rise in temperature is always positive up to at least 170°C.

Further, while the polyvinylidene fluoride polymer film according to this invention comprises mainly the $\alpha$-structure, the dielectric constant $\varepsilon'$ is comparable with that of the highly polar $\beta$-crystal form film, that is, it has a dielectric constant $\varepsilon'$ greater than 11 at 20°C and 1 KHz, and the dielectric constant shows less variation above and below room temperature and varies only, for example, within $\lambda 5\%$ when measured at temperatures between 20 and 80°C at 1 KHz.

Furthermore, since the film according to this invention is not one which has been prepared by stretching already formed spherulites, it has a very uniform surface and good transparency.

In the film according to this invention, the insulation resistance can be varied over a fairly wide range without changing the chemical structure of the film, and films having an insulation resistance from less than $10^{12}$ $\Omega cm$ up to $10^{15}$ $\Omega cm$ optionally may be prepared as required.

# 0 105 750

The film according to this invention can be produced, for example by an inflation method or, more specifically, by extruding a vinylidene fluoride polymer in a molten state from a circular die into a tubular form, introducing air or gas or liquid insoluble in the extruded polymer into the polymer tube through the die slit from the outside to the inside of the polymer tube, keeping the inside of the tubular body inflated while the molten vinylidene fluoride polymer is cooled and crystallized to solidify, and then taking up the thus solidified tubular body through guide rolls. In order to attain a high degree of orientation in this case, the polymer extruded from the die should be stretched in the take-up direction by a factor of greater than 5 as compared with the lateral direction perpendicular thereto, when the polymer after being solidified is taken up by the take-up rolls. Furthermore, in order to take up efficiently a film having a large area it is also desirable that the lateral length should be greater than the die diameter by a factor of more than 0.8, and preferably 1.0. Although it is possible to produce the film according to this invention in this way, it will be apparent that other methods can also be employed.

Although the thickness of the film according to this invention may be greater than 50μm, it is convenient for the film thickness to be less than 50μm when it is used as an electrical material.

The advantageous effects and other details of this invention will now be described in greater detail with reference to Examples embodying this invention and certain Comparative Examples.

## Example 1

A polyvinylidene fluoride (KF polymer #1000, manufactured by Kureha Kagaku Kogyo K.K.) was extruded in a molten state into a tubular form from a circular die having a diameter of 150 mm and a clearance of 2 mm and air was introduced from the outside through the die slit to the inside of the tubular body to keep the molten tubular polyvinylidene fluoride hollow until it is cooled and solidified to crystallize. Then, the solidified tube was taken up through guide rolls. The process was carried out at an extrusion rate of 300 g/min, a take-up speed of 36 m/min, a temperature of the melt at the die exit of 250°C and a film fold width of 25 cm. The thus prepared film had a thickness of about 9 μm, which means that the resin extruded from the die slit was stretched by the factor of 209 in the longitudinal direction and by a factor of 1.1 in the lateral direction. Further, the film was transparent and had the α-crystal structure, in which the infrared absorption ratio D530/D510 was 7, the orientation degree π of the molecular axis was 0.91, the birefringence index was $22\times10^{-3}$ and the infrared dichroic ratio of the characteristic absorption at 530 cm$^{-1}$ for the α-crystal structure was 1.58. As shown in Table 1, the dielectric constant ε' was about 13.8 at 20°C and about 13.4 at 80°C (at 1 KHz) with little temperature-dependency. The heat expansion coefficient was always positive in the course of a temperature rise from 20°C to 170°C.

## Example 2

A film having a film fold width of 35 cm and a thickness of about 8 μm, which had been prepared by crystallization under flow-orientation in a molten state using the same apparatus as in Example 1, had an infrared absorption ratio D530/D510 of 12.9, an orientation degree π for the molecular axis within the film plane of 0.92, a birefringence index of $20\times10^{-3}$ and an infrared dichroic ratio at 530 cm$^{-1}$ of 1.6. The dielectric constant ε' was about 12 which scarcely varied in the course of a temperature rise from 0°C to 90°C as shown in Figure 1 (I) and Table 1.

The heat expansion coefficient of the film in the course of temperature rise was always positive up to above 170°C.

## Example 3

A film having a film fold width of 12 cm and a thickness of about 4 μm which had been prepared by crystallization under flow-orientation in a molten state from a circular die of 80 mm in diameter, using the same procedure as in Example 1, was of the α-crystal form and had a crystalline orientation degree of 0.96 and an infrared dichroic ratio at 530 cm$^{-1}$ of 4.75. The dielectric constant ε' was 12.3 at room temperature (20°C) and 11.8 at 80°C (at 1 KHz), which was scarcely changed in the course of temperature rise as shown in Table 1. Its tan δ was less than 1% at 20°C as shown in Table 2. Further, the heat expansion coefficient of the film was always positive in the course of temperature rise up to about 170°C.

## Example 4

A film prepared in the same manner as in Example 3 was placed between frames, stretched at room temperature and then heat-treated in an air bath at 150°C. When the film was cooled nearly to room temperature while between the frames and then taken out, it had the α-crystal structure and an orientation degree for the molecular axis of 0.94 as shown in Table 1. The dielectric constant ε' in the course of temperature rise up to 80°C at 1 KHz. Further, the film exhibited no heat shrinkage even when it was reheated in a tension-free condition up to 165°C, which was higher than the heat-treatment temperature of 150°C.

## Comparative Example 1

A film of 7 μm in thickness which had been prepared by monoaxially stretching at 110°C a sheet of polyvinylidene fluoride melt-extruded through a T-die was mainly composed of the β-crystal structure and had an infrared absorption ratio D530/D510 of 0.1. The molecular axes were well oriented, with an

4

orientation degree π of 0.97. The infrared dichroic ratio at 510 cm$^{-1}$ was 3.6. Although the dielectric constant ε′ of the film was as great as 14 at 20°C and 1 KHz as shown in Fig. 1(U) and Table 1, its tan δ was 1.9% as shown in Table 2. The dielectric constant ε′ of the film was also greatly increased with temperature rise from 0°C to 80°C as shown in Fig. 1(U). When the film was reheated under tension-free conditions, heat shrinkage occurred gradually at about 100°C and, when the temperature was increased up to 130°C and then returned to room temperature, the resulting film thickness was uniform and abot 20 μm and the dielectric constant was about 9 at 20°C and 1 KHz.

Comparative Example 2

A film of 12 μm in thickness which had been prepared by biaxially stretching an unoriented sheet of polyvinylidene fluoride melt-extruded through a T-die was mainly composed of the α-crystal structure, while containing a minor amount of the β-crystal structure, and had an infrared absorption ratio D530/D510 of 2.3, an orientation degree π for the molecular axis of 0.85 and an infrared dichroic ratio at 530 cm$^{-1}$ of 1.6. The film shrank by about 10% at 160°C. The dielectric properties of the film are shown in tables 1 and 2. The dielectric constant ε′ was rather small, namely 10.8 at 20°C and 1 KHz, and it continuously increased with temperature rise from 0°C to 80°C as shown in Fig. 1, curve B, and the temperature-dependent change was remarkable as compared with that in Example 2, curve I.

Comparative Example 3

An unoriented sheet, which had been prepared by melt-extrusion from the T-die used in Comparative Example 2, had a thickness of 80 μm, was mainly composed of the α-crystal structure and exhibited no heat shrinkage even above 170°C. However, the orientation degree π for the molecular axis was close to zero and the infrared dichroic ratio at 530 cm$^{-1}$ was 1.2. The dielectric constant of the film was as small as 9.0 at 1 KHz and 20°C.

From the comparison between the Examples and the Comparative Examples in Tables 1 and 2, as well as in Figures 1 and 2, it is apparent that the film according to this invention has a high dielectric constant which can be maintained unchanged from room temperature up to about 80°C and can also provide an effect of decreasing tan δ at temperatures from 0°C up to about 20°C.

Example 5

For the film according to this invention in Example 3 and the biaxially stretched film in Comparative Example 2, the surface property was evaluated, based on a measurement of surface gloss. A digital varying angle glossmeter, type VG-1D, manufactured by Nihon Denshoku Kogyo K.K. was used and both the light projecting angle and a light receiving angle were set to 60°. The value indicated on a digitmeter was set to a reference value with a gloss reference plate. Then, the glossiness GS (60°) for the sample to be measured was determined by replacing the reference plate by the sample to be measured. The measured values are given in Table 3, from which it can be seen that the film according to this invention in Example 3 has a greater glossiness and a better surface property as compared with those of the film in Comparative Example 2.

TABLE 1

| Sample | Main crystal form (D530/D510) | Orientation degree (π) | Dichroic* ratio (D⊥/D‖) | Volume change by temperature (ΔV/ΔT) | Dielectric constant ε′ (1 KHz) | | |
|---|---|---|---|---|---|---|---|
| | | | | | 0°C | 20°C | 80°C |
| Example 1 | α(7) | 0.91 | 1.58 | positive | 13.6 | 13.8 | 13.4 |
| Example 2 | α(12.9) | 0.92 | 1.6 | positive | 12.0 | 12.2 | 12.1 |
| Example 3 | α(7.2) | 0.96 | 4.75 | positive | 11.9 | 12.3 | 11.3 |
| Example 4 | α(13.8) | 0.94 | 4.5 | positive | 13.9 | 13.8 | 13.0 |
| Comparative Example 1 | β(0.1) | 0.97 | 3.6 | negative above 90°C | 12.7 | 14.0 | 15.7 |
| Comparative Example 2 | α(2.3) | 0.85 | 1.6** | negative above 120°C | 10.4 | 10.8 | 11.6 |
| Comparative Example 3 | α(8) | 0 | 1.2 | positive | 8.9 | 9.0 | 10.1 |

\*: Dichroic ratio at characteristic infrared absorption band for the main crystal form.

\*\*: Dichroic ratio for the α-crystal structure. The dichroic ratio for the β-crystal structure was less than 1.

TABLE 2

| Sample | tan δ (1 KHz) | | |
|---|---|---|---|
| | 0°C | 10°C | 20°C |
| Example 1 | 2.5% | 1.3% | 1.1% |
| Example 2 | 2.4 | 1.4 | 1.1 |
| Example 3 | 2.7 | 1.4 | 0.95 |
| Comparative Example 1 | 4.7 | 1.6 | 1.9 |
| Comparative Example 2 | 3.4 | 2.0 | 1.4 |

TABLE 3

| Sample | GS (60°) | |
|---|---|---|
| | Parallel*** | Perpendicular**** |
| Example 3 | 120.2 | 128.3 |
| Comparative Example 2 | 100.1 | 91.1 |

***: In the case of light projection and light reception in the direction parallel to the direction of drawing or to the stretching direction at the second axis of the film.

****: In the case of light projection and light reception in the direction perpendicular to the drafting direction or to the stretching direction at the second axis of the film.

**Claims**

1. A dielectric film comprising a vinylidene fluoride polymer or copolymer, in which the film has a predominantly α-crystal structure as crystal structure, the molecular axes in the crystalline region of the film are oriented mainly parallel to the plane of the film, the degree of orientation π being from 0.8 to 1.0, and the film manifests no heat shrinkage when heated from room temperature to near the melting point, characterised in that its molecular axes in the crystal region of the film are anisotropically oriented within the plane of the film and the dichroic ratio at the characteristic infrared absorption of 530 cm$^{-1}$ of the predominant crystal form is greater than 1.3.

2. A dielectric film according to claim 1, characterised in that its dielectric constant is greater than 11 at a temperature of 20°C and at a frequency of 1 KHz.

3. The use of a dielectric film according to any of claims 1 or 2, as a capacitor.

4. A process for producing a dielectric film as defined in claims 1 or 2, characterised in that the vinylidene fluoride polymer is highly flow-oriented, to such an extent that it has an orientation degree in plane of from 0.8 to 1.0 when cooled without subsequent stretching and is solidified and then taken up.

5. A process according to claim 4, characterised in that the molten polymer is extruded from a die into a tubular form, the tube is inflated by introduction of a fluid, and the tubular molten polymer is kept inflated until it is cooled to solidification, wherein the polymer extruded from the die is stretched in the take-up direction by a factor greater than 5, as compared with the lateral direction perpendicular thereto, when the polymer after being solidified is taken up by the take-up rolls.

**Patentansprüche**

1. Dielektrischer Film, der ein Vinylidenfluorid-Polymer oder -Copolymer enthält, bei dem der Film eine vorherrschende α-Kristallstruktur als Kristallstruktur hat, die Molekular-Achsen in dem kristallinen Bereich des Films hauptsächlich parallel zu der Ebene des Films orientiert sind, der Orientierungsgrad π von 0,8 bis 1,0 reicht und der Film kein Wärmeschrumpfen zeigt, wenn er von Zimmertemperatur bis nahe dem Schmelzpunkt erwärmt wird, dadurch gekennzeichnet, daß seine Molekular-Achsen im kristallinen Bereich des Films innerhalb der Ebene des Films anisotropisch orientiert sind und das Dichroit-Verhältnis bei der charakteristischen Infrarotabsorption von 530 cm$^{-1}$ der vorherrschenden Kristallform größer als 1,3 ist.

2. Dielektrischer Film nach Anspruch 1, dadurch gekennzeichnet, daß dessen Dielektrizitätkonstante bei einer Temperatur von 20°C und einer Frequenz von 1 kHz größer als 11 ist.

3. Verwendung eines dielektrischen Films nach Anspruch 1 oder 2 als Kondensator.

4. Verfahren zur Herstellung eines dielektrischen Films nach Anspruch 1 oder 2, dadurch gekennzeichnet, daß das Vinylidenfluorid-Polymer stark bis zu einem derartigen Ausmaß fließorientiert ist, daß es einen Orientierungsgrad in der Ebene von 0,8 bis 1,0 hat, wenn es ohne nachfolgendes Dehnen abgekühlt wird, dann verfestigt und dann aufgewickelt wird.

5. Verfahren nach Anspruch 4, dadurch gekennzeichnet, daß das geschmolzene Polymer aus einer Düse in eine rohrförmige Form gespritzt wird, die rohrförmige Form dann durch Einleiten eines Fluids aufgeweitet wird und das rohrförmige geschmolzene Polymer aufgeweitet gehalten bleibt, bis es zu seiner Verfestigung abgekühlt ist, wobei das aus der Düse gespritzte Polymer in der Aufnahmerichtung verglichen mit der senkrecht dazu liegenden lateralen Richtung um einen Faktor, der größer als 5 ist, gedehnt wird, wenn das Polymer, nachdem es verfestigt ist, durch Aufwickelrollen aufgewickelt wird.

**Revendications**

1. Film diélectrique constitué d'un polymère ou copolymère de fluorure de vinylidène, le film ayant une structure cristalline qui est essentiellement une structure cristalline α, les axes moléculaires dans la région cristalline du film étant orientés essentiellement en direction parallèle au plan du film, le degré d'orientation π étant compris entre 0,8 et 1,0 et le film ne manifestant pas de retrait thermique lorsqu'il est chauffé de la température ambiante à une température proche de sa température de fusion caractérisé en ce que ses axes moléculaires, dans la région cristalline du film, ont une orientation anisotrope dans le plan du film et la rapport dichroïque pour l'absorption infrarouge caractéristique à 530 cm$^{-1}$ de la forme cristalline prédominante est supérieur à 1,3.

2. Film diélectrique selon la revendication 1, caractérisé en ce que sa constante diélectrique est supérieure à 11 à une température de 20°C et à une fréquence de 1 kHz.

3. Application d'un film diélectrique selon l'une des revendications 1 et 2, à un condensateur.

4. Procédé de fabrication d'un film diélectrique selon l'une des revendications 1 et 2, caractérisé en ce que le polymère de fluorure de vinylidène a une orientation d'écoulement importante, à un point tel que son degré d'orientation dans un plan est compris entre 0,8 et 1,0 après refroidissement sand étirage ultérieur puis solidification et prélèvement.

5. Procédé selon la revendication 4, caractérisé en ce que le polymère fondu est extrudé sous forme tubulaire à partir d'une filière, le tube est gonflé par introduction d'un fluide, et le polymère tubulaire fondu est maintenu gonflé jusqu'à son refroidissement à solidification, dans lequel le polymère extrudé par la filière est étiré dans la direction de prélèvement d'un facteur supérieur à 5, par rapport à la direction latérale perpendiculaire, lorsque le polymère, après solidification, est prélevé par les rouleaux de prélèvement.

0 105 750

F I G. 1

F I G. 2

1